# EUROPEAN PATENT APPLICATION

(11) **EP 2 312 870 A2**
(43) Date of publication of application: **20.04.2011**
(21) Application number: 10163647.0
(22) Date of filing: 21.05.2010
(51) Int. Cl.: H04S 7/00

(54) **Apparatus and method for processing signal**

(30) Priority: 13.10.2009 KR 20090097456
(71) Applicant: Samsung Electronics Co., Ltd., Suwon-si, Gyeonggi-do (KR)
(72) Inventor: Lee, Hyuck-jae, Seoul (KR)
(74) Representative: Walaski, Jan Filip

(57) **Abstract**

An apparatus and method for processing a signal are provided. The signal processing apparatus includes: an audio processor which processes and outputs an audio signal; a video processor which processes and outputs an image; and a controller which controls the audio processor to perform a sound quality improvement process on the audio signal, and controls the video processor to display first data as a first image corresponding to a characteristic of the audio signal before performing the process and second data as a second image corresponding to the characteristic of the audio signal after performing the process

## Description

The present invention relates to processing a signal, and more particularly, to processing a signal in which a difference in sound quality before and after processing the signal is displayed as an image, so that an improvement in sound quality can be clearly and simply ascertained.

To output audio through a speaker in an image processing apparatus, a sound system or the like, there has been employed audio signal processing for improving sound quality of the output audio.

When audio signal processing is performed, the method mostly used to ascertain improvement in sound quality by a user who does not use separate audio analyzer is a subjective comparison judgment based on a the user's hearing. Thus, objectivity and reliability of the judgment regarding an improvement in sound quality due the audio signal processing cannot be obtained.

An aspect of one or more exemplary embodiments is to display an audio signal image for a comparison of sound quality, in which the difference in sound quality before and after processing a signal is displayed in the form of an image, so that improvement of sound quality can be clearly and simply ascertained.

According to an aspect of an exemplary embodiment there is provided a signal processing apparatus including: an audio processor which processes and outputs an audio signal; an video processor which processes and outputs an image; and a controller which controls the audio processor to perform a sound quality improvement process on the audio signal, and controls the video processor to display first data as a first image corresponding to a characteristic of the audio signal before performing the sound quality improvement process and second data as a second image corresponding to the characteristic of the audio signal after performing the sound quality improvement process relating.

The characteristic of the audio signal may include at least one of a waveform of the audio signal, a sound pressure of the audio signal, and a frequency of the audio signal. The waveform of the audio signal may include at least one of the sound pressure according to time and the sound pressure according to the frequency. The first image and the second image may include a waveform of an audio signal according to at least one of time and frequency. The controller may control the video processor to display the first image and the second image simultaneously. The controller may control the video processor to display the first image and the second image as being overlapped with each other. The controller may control the video processor to display the first image and the second image independently of each other. The controller may control the video processor to display the first image and the second image in sequence. The controller may control the video processor to display the first data and the second data together with a portion processed for the improvement of the sound quality. The controller may control the video processor to display the first image and the second image together with at least one of a portion adjusted in volume, a frequency band amplified in a level and a frequency band recovered.

According to another aspect of one or more exemplary embodiments, there is provided a signal processing method including: performing a process to improve sound quality of an audio signal; and displaying first data as a first image corresponding to a characteristic of the audio signal before performing the process and second data as a second image corresponding to a characteristic of the audio signal after performing the process.

The characteristic of the audio may include at least one of a waveform of the audio signal, a sound pressure of the audio signal and a frequency of the audio signal. The waveform of the audio signal may include at least one of the sound pressure according to time and the sound pressure according to the frequency. The first image and the second image may include a waveform of an audio signal according to at least one of time and frequency. The first image and the second image may be simultaneously displayed. The first image and the second image may be displayed as being overlapped with each other. The first image and the second image may be displayed independently of each other. The first image and the second image may be displayed in sequence. The first image and the second image may be displayed together with a portion processed for the improvement of the sound quality. The first image and the second image may be displayed together with at least one of a portion adjusted in volume, a frequency band amplified in a level and a frequency band recovered.

The above and/or other aspects will become apparent and more readily appreciated from the following description of exemplary embodiments, taken in conjunction with the accompanying drawings, in which:
FIG. 1 is a block diagram of a signal processing apparatus according to an exemplary embodiment;
FIGs. 2A and 2B show images displayed by a signal processing method according to an exemplary embodiment;
FIGs. 3A and 3B show images displayed by a signal processing method according to another exemplary embodiment;
FIGs. 4A and 4B show images displayed by a signal processing method according to still another exemplary embodiment; and
FIG. 5 is a flowchart of processing a signal according to an exemplary embodiment.

Below, exemplary embodiments will be described in detail with reference to accompanying drawings so as to be easily realized by a person having ordinary knowledge in the art. The inventive concept may be embodied in various forms without being limited to the particular exemplary embodiments set forth herein. Descriptions of well-known parts are omitted for clarity, and like reference numerals refer to like elements throughout.

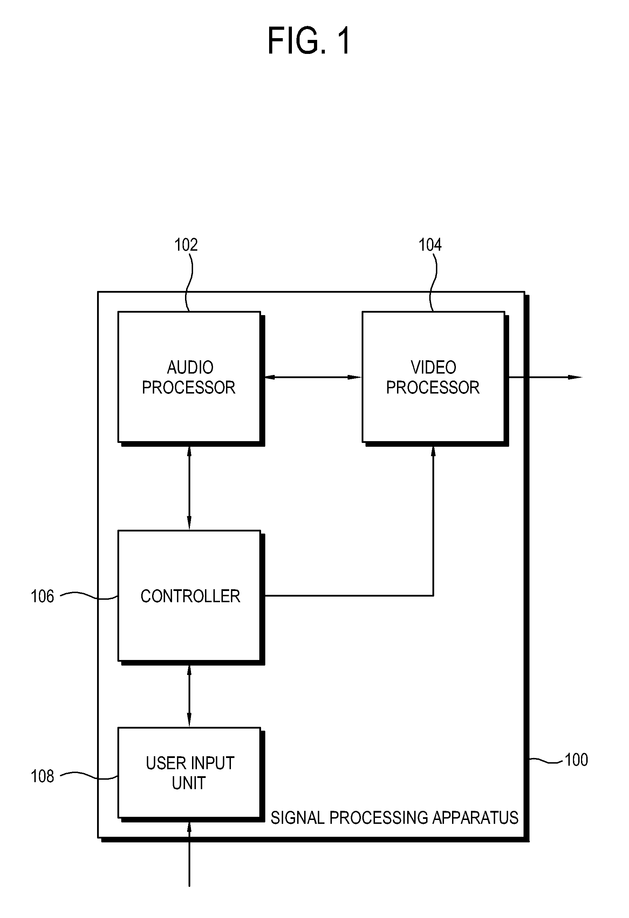

FIG. 1 is a block diagram of a signal processing apparatus according to an exemplary embodiment.

According to an exemplary embodiment, a signal processing apparatus 100 may include a digital television (TV), a set-top box, a digital versatile disc (DVD) or Blu-ray disc(BD) player a home theater, a personal computer (PC), a mobile terminal, a mobile audio, etc. Further, the signal processing apparatus 100 may include a display unit to display an image, and any electronic device capable of performing audio signal processing to improve sound quality of an audio signal can be used as the signal processing apparatus 100 according to an exemplary embodiment.

The signal processing apparatus 100 in this exemplary embodiment may include an audio processor 102, a video processor 104, a controller 106, and a user input unit 108.

The audio processor 102 processes and outputs an audio signal. Specifically, the audio processor 102 may decode encoded audio data, demodulate modulated audio data, etc.

Further, the audio processor 102 may perform a process relating to improving the sound quality of an audio signal. Specifically, the audio processor 102 may control volume or a frequency characteristic of an audio signal to be output. In the case of controlling the volume of the output audio signal, the audio processor 102 may amplify or reduce the volume to a certain level. In the case of controlling the frequency characteristic of the output audio signal, the audio processor 102 may amplify or reduce an audio signal in a certain frequency band, or restore an audio signal of a frequency band lost when encoding the audio signal. Further, the audio processor 102 may perform a process such as gain control, signal distortion elimination, noise removal, etc.

The audio processor 102 may further include a speaker (not shown) to output the processed audio signal.

The video processor 104 may process and output an image. Specifically, the video processor 104 may display a characteristic of an audio signal in a form of an image. To this end, the video processor 104 may include a liquid crystal display (LCD), an organic light emitting diode (OLED), a plasma display panel (PDP), etc.

The controller 106 may control the audio processor 102 to perform a process relating to improving the sound quality of an audio signal. In this case, the controller 106 may control the video processor 104 to display first data in the form of an image corresponding to an audio characteristic of an audio signal before performing the process relating to improving the sound quality, and second data in the form of an image corresponding to the audio characteristic of the audio signal after performing the process relating to improving the sound quality.

Here, the audio characteristic may include at least one of an audio waveform, an audio sound pressure and an audio frequency. Specifically, the audio waveform may be at least one of a sound pressure according to time, a sound pressure according to frequency, and a sound pressure according to time and frequency. The audio sound pressure may be an average sound pressure of the audio signal. The audio frequency may be an average frequency of the audio signal. The audio waveform may be displayed as a continuous curved line, but the audio sound pressure and the audio frequency may be displayed as a discontinuous discrete value.

The first data is displayed in the form of an image corresponding to the audio characteristic of the audio signal before performing the process relating to improving the sound quality. The second data is displayed in the form of an image corresponding to the audio characteristic of the audio signal after performing the process relating improving the sound quality. For example, the first data and the second data may be the audio waveform according to at least one of time and frequency.

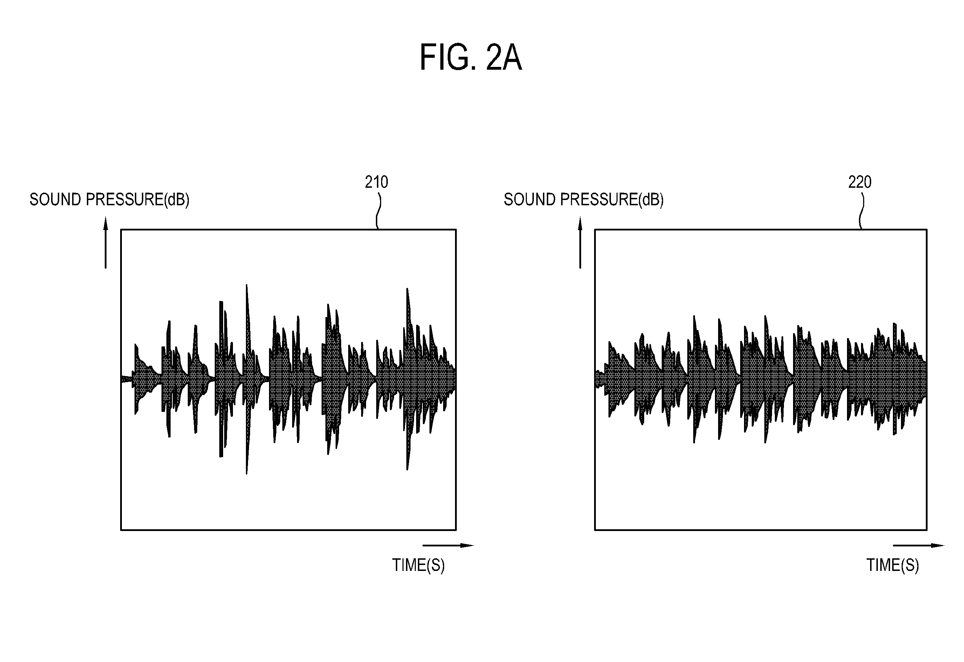

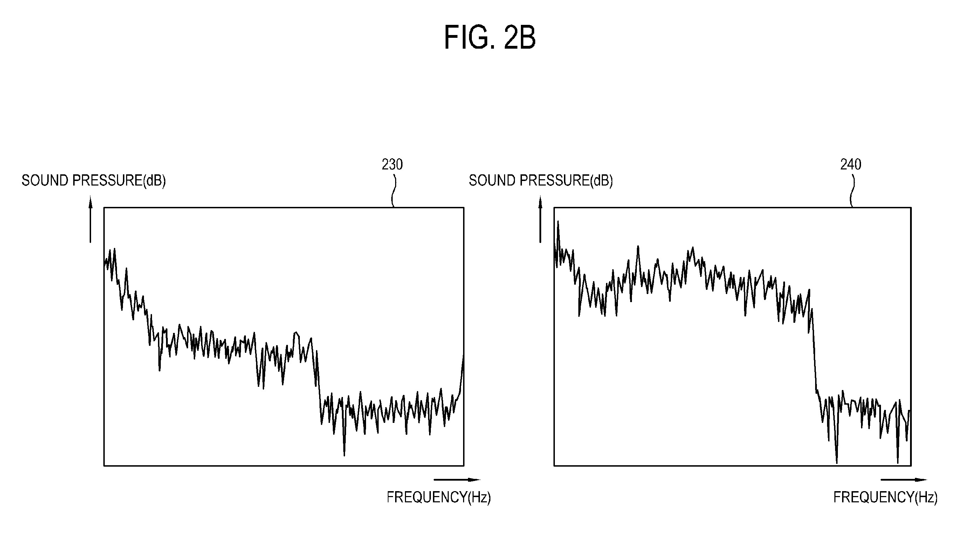

According to an exemplary embodiment, the controller 106 may control the video processor 104 to display the first data and the second data at the same time. In this case, the controller 106 may control the video processor 104 to display the first data and the second data as being overlapped with each other or display the first data and the second data independently of each other. In this regard, details will be described with reference to FIGs. 2A and 2B.

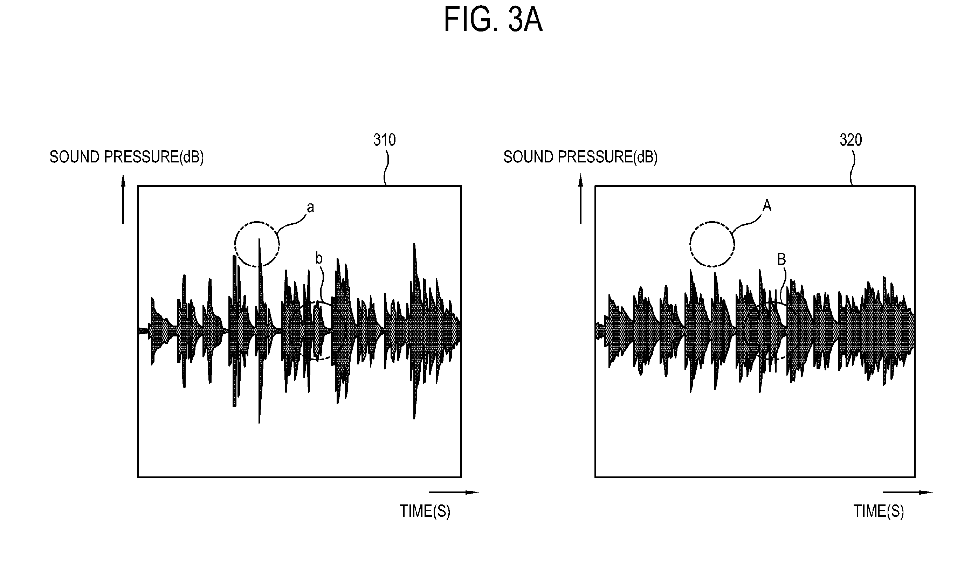

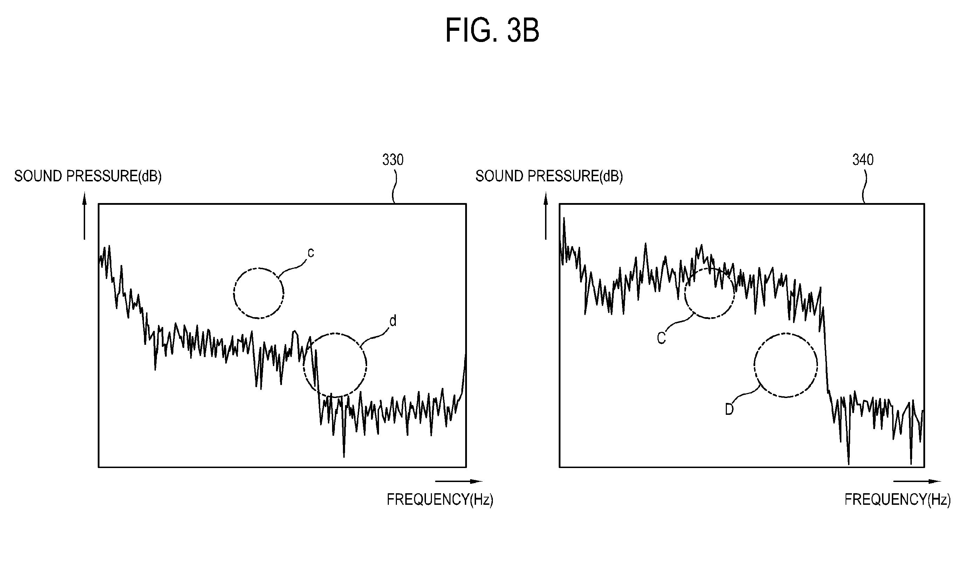

According to another exemplary embodiment, the controller 106 may control the video processor 104 to display the first data and the second data together with a portion processed to improve the sound quality. In this case, the controller 106 may control the video processor 104 to display at least one of a portion adjusted in volume, a frequency band amplified in a level and a frequency band recovered on the first data and the second data. In this regard, details will be described with reference to FIGs. 3A and 3B.

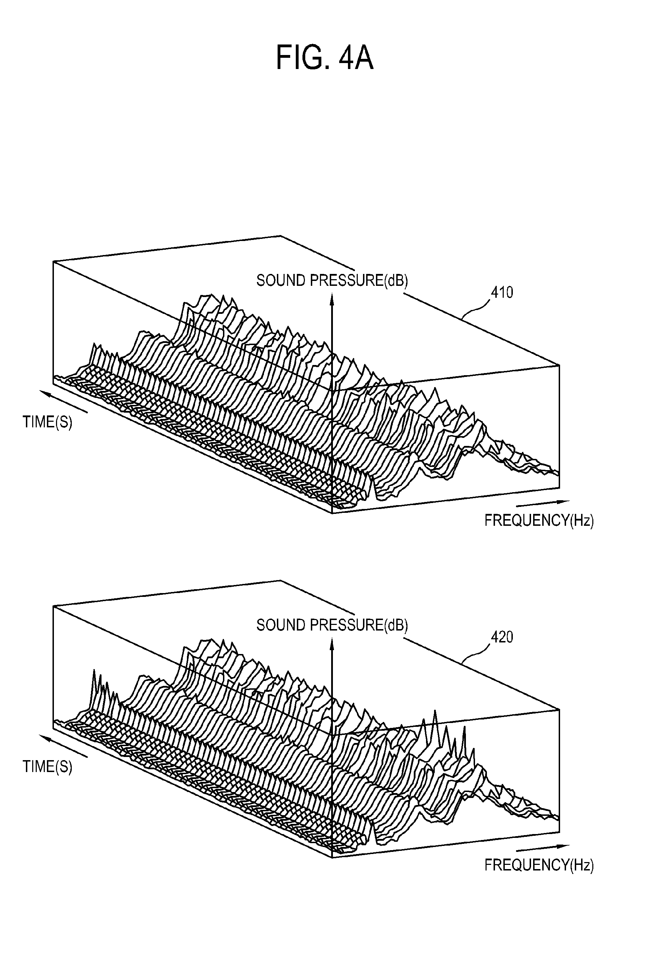

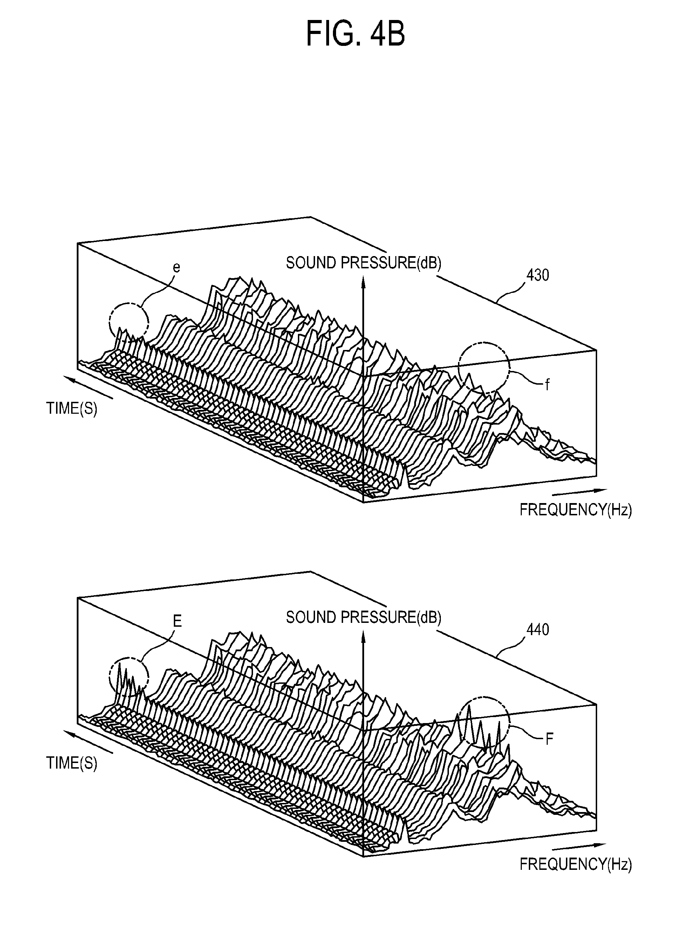

According to still another exemplary embodiment, the controller 106 may control the video processor 104 to display the first data and the second data in three dimensions if the audio characteristic includes three factors or more. For example, if the first data and the second data are the audio waveforms about the sound pressure according to the time and frequency, the first data and the second data may be displayed in three dimensions within a three-dimensional space. In this regard, details will be described with reference to FIGs. 4A and 4B.

According to yet another exemplary embodiment, the controller 106 may control the video processor 104 to display the first data and the second data in sequence. In this case, the first data and the second data may be alternately displayed.

The signal processing apparatus 100 in this exemplary embodiment may include the user input unit 108. The user input unit 108 may receive a user's selection. In this case, a user may select a desired process among the processes relating to the improvement of the sound quality of audio.

FIGs. 2A and 2B show images displayed by a signal processing method according to an exemplary embodiment.

According to the signal processing method in this exemplary embodiment, the first data formed as an image corresponding to the audio characteristic of the audio signal before performing the process relating to improving the sound quality and the second data formed as an image corresponding to the audio characteristic of the audio signal after performing the process relating to improving the sound quality can be displayed at the same time. In this case, the image may contain any information such as a temporal waveform, a frequency waveform, etc. of an audio signal, which can represent a characteristic of a signal. Further, the first data and the second data can be displayed in various forms besides comparison in time or frequency.

Specifically, FIG. 2A shows an audio waveform for comparing before and after processing an automatic volume control function. In this case, the audio waveform is displayed on a time domain, and relates to the sound pressure according to time. In FIG. 2A, the first data is a left image 210, and the second data is a right image 220. With regard to each of the first data and the second data, an X axis represents time in seconds (s), and a Y axis represents sound pressure in decibels (dB).

Referring to the left image 210, a volume of portions of an original audio signal is too high and too low. In other words, deviation between the highest volume and the lowest volume is so large that a listener cannot listen to evenly balanced sound. Therefore, the signal processing apparatus 100 uses the automatic volume control function to reduce the volume of high volume portions of the audio signal and to amplify the volume of low volume portions of the audio signal, thereby acquiring an audio waveform shown in the right image 220.

In comparison between the left image 210 and the right image 220, it will be easily appreciated that the volume of the output audio at a certain time range is amplified or reduced. Thus, a user can readily and visually ascertain the improvement of the sound quality based on the automatic volume control function for keeping the volume of the audio signal evenly balanced.

Specifically, FIG. 2B shows an audio waveform for comparing an audio signal before and after processing a frequency characteristic improving function. In this case, the audio waveform is displayed on a frequency domain, and relates to the sound pressure according to frequency. In FIG. 2B, the first data is a left image 230, and the second data is a right image 240. With regard to each of the first data and the second data, an X axis represents frequency in Hertz (Hz), and a Y axis represents sound pressure in decibels (dB).

If an audio signal corresponding to a middle-band frequency is increased, the audio signal is improved in articulation and recognition. If the audio signal corresponding to a high-band frequency is increased, the signal becomes sharpened and the audio has a high tone. If the audio signal corresponding to a low-band frequency is increased, sound becomes powerful and the audio has a low tone. Thus, the signal processing apparatus 100 amplifies or reduces a signal at a certain frequency band, thereby generating an audio having a desired characteristic.

Referring to the left image 230, an original audio signal has little signal in a frequency band equal to or higher than a predetermined frequency (e.g., 13 kHz), and has a very low signal level in the frequency band equal to or lower than the predetermined frequency.

Therefore, the signal processing apparatus 100 generates a signal having a frequency band equal to or higher than 13 kHz, and amplifies the signal having the frequency band equal to or lower than 13 kHz into a signal having a proper level, thereby acquiring an audio waveform shown in the right image 240.

In comparison between the left image 230 and the right image 240, it will be easily appreciated that a signal at a certain frequency band is generated or amplified. Thus, a user can readily and visually ascertain the improvement of the sound quality based on a compensation of a frequency characteristic.

FIGs. 3A and 3B show images displayed by a signal processing method according to another exemplary embodiment.

According to the signal processing method in this exemplary embodiment, the first data is formed as an image corresponding to an audio characteristic of the audio signal before performing the process relating to improving the sound quality and the second data is formed as an image corresponding to the audio characteristic of the audio signal after performing the process relating to improving the sound quality can be displayed together with a portion processed for the improvement of the sound quality.

FIG. 3A shows that a volume controlled portion is displayed in addition to the audio waveform for comparing before and after processing the automatic volume control function shown in FIG. 2A.

In FIG. 3A, the first data is a left image 310, and the second data is a right image 320.

Referring to the left image 310, "a" indicates a relatively high volume portion of the original audio signal, and a "b" indicates a relatively low volume portion of the original audio signal. Thus, the signal processing apparatus 100 reduces the volume of the signal corresponding to the "a" portion into a proper level, and amplifies the volume of the signal corresponding to the "b" portion into a proper level.

In the right image 320, "A" indicates a waveform of a portion after reducing the volume of the signal corresponding to the "a" portion, and "B" indicates a waveform of a portion after amplifying the volume of the signal corresponding to the "b" portion.

In comparison between the left image 310 and the right image 320, it will be easily appreciated what portions of the audio output signal volume has been amplified or reduced.

FIG. 3B shows that a level-amplified frequency band and a restored frequency band are displayed in addition to the audio waveform for comparing before and after processing the frequency characteristic improving function shown in FIG. 2B.

In FIG. 3B, the first data is a left image 330, and the second data is a right image 340.

Referring to the left image 330, "d" indicates a portion of the signal having a frequency band equal to or higher than 13KHz in the original audio signal, and "c" indicates a portion of the signal having a frequency band equal to or lower than 13 kHz. Thus, the signal processing apparatus 100 generates a signal having the frequency band equal to or higher than 13 kHz corresponding to the "d" portion, and amplifies a signal having the frequency band equal to or lower than 13 kHz corresponding to the "c" portion into a proper-level signal.

In the right image 340, "D" is a waveform of a portion of the signal after generating a signal having the frequency band corresponding to the "d" portion, and "C" is a waveform of a portion of the signal after amplifying the signal having the frequency band corresponding to the "c" portion.

In comparing the left image 330 and the right image 340, the frequency band in which the signal is amplified or generated will be easily appreciated.

FIGs. 4A and 4B show images displayed by a signal processing method according to still another exemplary embodiment. According to the signal processing method in this exemplary embodiment, the first data and the second data may be displayed in three dimensions if the audio characteristic includes three factors. For example, if the first data and the second data are the audio waveforms indicating the sound pressure according to the time and frequency, the first data and the second data may be displayed in the form of the three dimensions within a three-dimensional space.

Specifically, FIG. 4A shows an audio waveform for comparing the audio signal before and after processing the automatic volume control function. In this case, the audio waveform is displayed on time and frequency domains, and relates to the sound pressure according to time and frequency. In FIG. 4A, the first data is an upper image 410, and the second data is a lower image 420. With regard to each of the first data and the second data, an X axis represents frequency in hertz (Hz), a Y axis represents time in seconds (s), and a Z axis represents sound pressure in decibels (dB).

In comparison between the upper image 410 and the lower image 420, it will be easily appreciated that the volume of the output audio in a certain time zone and a certain frequency is amplified or reduced. Referring to FIG. 4A, a signal is amplified in an anterior time zone and a high frequency band and in a posterior time zone and a low frequency band.

FIG. 4B shows that a volume controlled portion is displayed in addition to the audio waveform for comparing before and after processing the automatic volume control function shown in FIG. 4A. In this case, the first data is an upper image 430, and the second data is a lower image 440.

In the upper image 430, the signal in the posterior time zone and the low frequency band, i.e., a portion "e" and the signal in the anterior time zone and the high frequency band, i.e., a portion "f' are amplified. Thus, the "e" portion can have a waveform of an "E" portion displayed in the lower image 440, and the "f" portion can have a waveform of an "F" portion displayed in the lower image 440.

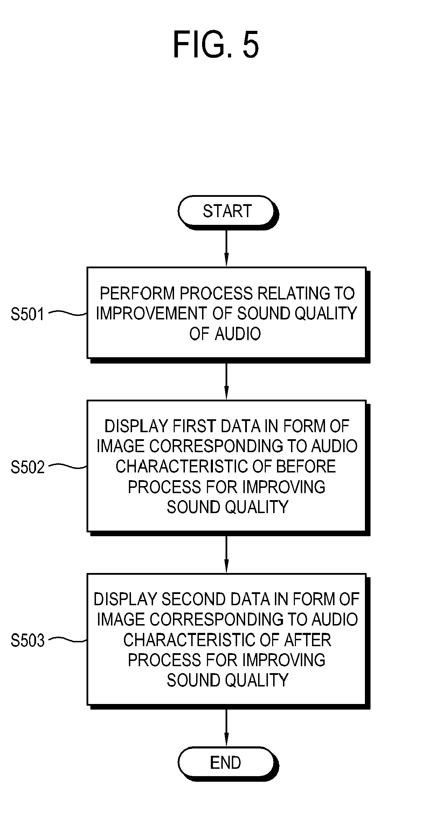

FIG. 5 is a flowchart of processing a signal according to an exemplary embodiment.

At operation S501, the signal processing apparatus 100 performs the process relating to the improvement of the sound quality of the audio signal.

At operation S502, the signal processing apparatus 100 displays the first data in the form of an image corresponding to the audio characteristic before performing the process for improving the sound quality.

At operation S503, the signal processing apparatus 100 displays the second data in the form of an image corresponding to the audio characteristic after performing the process for improving the sound quality.

According to an exemplary embodiment, the signal processing apparatus 100 may display the first data and the second data at the same time. For example, the signal processing apparatus 100 may display the first data and the second data as being overlapped with each other or display the first data and the second data independently of each other. According to another exemplary embodiment, the signal processing apparatus 100 may display the first data and the second data together with a portion processed for the improvement of the sound quality. In this case, the signal processing apparatus 100 may display the first data and the second data together with at least one of a portion adjusted in volume, a frequency band amplified in a level and a frequency band recovered. According to still another exemplary embodiment, the signal processing apparatus 100 display the first data and the second data in the form of three dimensions if the audio characteristic includes three factors. According to yet another exemplary embodiment of the present invention, the signal processing apparatus 100 may display the first data and the second data in sequence.

Thus, the signal processing method according to an exemplary embodiment is completed.

When an original audio signal before performing a process for improving sound quality and an audio signal after performing the process for improving the sound quality are simultaneously displayed as a temporal waveform or a frequency waveform, a user can visually ascertain the improvement of the sound quality.

As described above, audio waveforms before and after processing a signal to improve sound quality are displayed simultaneously or sequentially, so that the improvement of the sound quality can be ascertained by an objective visual method.

Although a few exemplary embodiments have been shown and described, it will be appreciated by those skilled in the art that changes may be made in these embodiments without departing from the principles of the invention, the scope of which is defined in the appended claims.

## Claims

1. A signal processing apparatus comprising:
an audio processor which processes and outputs an audio signal;
a video processor which processes and outputs an image; and
a controller which controls the audio processor to perform a sound quality improvement process on the audio signal, and controls the video processor to display first data as a first image corresponding to a characteristic of the audio signal before performing the sound quality improvement process and second data as a second image corresponding to the characteristic of the audio signal after performing the sound quality improvement process.

2. The signal processing apparatus according to claim 1, wherein the characteristic of the audio signal comprises at least one of a waveform of the audio signal, a sound pressure of the audio signal, and a frequency of the audio signal.

3. The signal processing apparatus according to claim 2, wherein the waveform of the audio signal comprises at least one of the sound pressure according to time and the sound pressure according to the frequency.

4. The signal processing apparatus according to claim 1, wherein the first image and the second image comprise a waveform of the audio signal according to at least one of time and frequency.

5. The signal processing apparatus according to claim 1, wherein the controller controls the video processor to display the first image and the second image simultaneously.

6. The signal processing apparatus according to claim 5, wherein the controller controls the video processor to display the first image and the second image as being overlapped with each other.

7. The signal processing apparatus according to claim 5, wherein the controller controls the video processor to display the first image independently of the second image.

8. The signal processing apparatus according to claim 1, wherein the controller controls the video processor to display the first image and the second image in sequence.

9. The signal processing apparatus according to claim 1, wherein the controller controls the video processor to display the first data and the second data together with a portion of the audio signal that was modified by the sound quality improvement process.

10. The signal processing apparatus according to claim 9, wherein the controller controls the video processor to display the first data and the second data together with at least one of a portion adjusted in volume, a frequency band amplified in a level, and a frequency band recovered.

11. A signal processing method comprising:
performing a process to improve sound quality of an audio signal; and
displaying first data as a first image corresponding to a characteristic of the audio signal before performing the process and second data as a second image corresponding to the characteristic of the audio signal after performing the process.

12. The signal processing method according to claim 11, wherein the characteristic of the audio signal comprises at least one of a waveform of the audio signal, a sound pressure of the audio signal, and a frequency of the audio signal.

13. The signal processing method according to claim 12, wherein the waveform of the audio signal comprises at least one of the sound pressure according to time and the sound pressure according to the frequency.

14. The signal processing method according to claim 11, wherein the first image and the second image are simultaneously displayed.

15. The signal processing method according to claim 11, wherein the first image and the second image are displayed together with a portion of the audio signal that was modified by the process.
